Europäisches Patentamt

European Patent Office

Office européen des brevets

(11) Numéro de publication : **0 319 556 B1**

## (12) FASCICULE DE BREVET EUROPEEN

(45) Date de publication du fascicule du brevet :
**19.08.92 Bulletin 92/34**

(21) Numéro de dépôt : **88904974.8**

(22) Date de dépôt : **25.05.88**

(86) Numéro de dépôt international :
**PCT/FR88/00260**

(87) Numéro de publication internationale :
**WO 88/09639 15.12.88 Gazette 88/27**

(51) Int. Cl.⁵ : **A47J 17/14**

(54) **APPAREIL D'EPLUCHAGE DE FRUITS ET LEGUMES.**

(30) Priorité : **05.06.87 FR 8707883**

(43) Date de publication de la demande :
**14.06.89 Bulletin 89/24**

(45) Mention de la délivrance du brevet :
**19.08.92 Bulletin 92/34**

(84) Etats contractants désignés :
**AT BE CH DE FR GB IT LI LU NL SE**

(56) Documents cités :
**CH-A- 506 982**
**FR-A- 1 248 668**
**US-A- 3 113 603**
**US-A- 4 656 936**

(73) Titulaire : **CAILLIOT, Serge**
**Le Manoir de Carabillon**
**Cordey, F-14700 Falaise (FR)**

(72) Inventeur : **CAILLIOT, Serge**
**Le Manoir de Carabillon**
**Cordey, F-14700 Falaise (FR)**

(74) Mandataire : **Viard, Jean**
**Cabinet VIARD 28 bis, avenue Mozart**
**F-75016 Paris (FR)**

EP 0 319 556 B1

Jouve, 18, rue Saint-Denis, 75001 PARIS

## Description

La présente invention a pour objet un appareil d'épluchage de fruits et de légumes et en particulier, mais non exclusivement, un appareil manuel à usage domestique.

L'épluchage ou pelage de denrées diverses telles que des fruits ou des légumes, consiste à séparer la peau, qui normalement protège le fruit ou le légume, du corps ou de la pulpe de celui-ci. Traditionnellement, une telle opération se fait au moyen d'un couteau convenablement affûté, le fil de la lame permettant d'appliquer à la région limite entre la pulpe et la peau une pression importante qui effectue la séparation.

Dans l'épluchage manuel, c'est-a-dire l'épluchage dans lequel le fruit est tenu à la main, un progrès considérable pour les gens maladroits a consisté dans l'apparition d'un couteau perfectionné, dit "économiseur", qui présente une surface de portée sur la partie extérieure du légume, séparée d'une hauteur déterminée de la lame proprement dite. Ainsi, à chaque passage sur le fruit on n'enlève qu'une épaisseur déterminée de la peau, mais sur une largeur limitée et avec un effort relativement important.

En ce qui concerne plus particulièrement l'épluchage des fruits, il a déjà été proposé, afin de mécaniser cette opération, d'amener successivement les fruits sur un dispositif fonctionnant selon le principe du tour, le fruit étant monté entre pointes, et un ou plusieurs outils fixes ou rotatifs étant amenés à la périphérie de ce fruit pour imiter l'épluchage manuel, c'est-a-dire pour détacher une pelure continue.

Dans le brevet US-A-3 113 603, est décrit un dispositif présentant un couteau rotatif à tranchant cylindrique, combiné avec un disque soutenant le tranchant muni de fenêtres affûtées dans le plan du disque pour découper la pelure.

Toutefois, de tels dispositifs ne conviennent pas pour l'épluchage des légumes en raison d'une part de l'usure rapide des arêtes tranchantes, notamment avec des produits à peau terreuse, tels que les pommes de terre et d'autre part des formes irrégulières et des différences de duretés de légumes. Pour cette raison on utilise dans l'industrie, pour éplucher les légumes, des dispositifs abrasifs qui les traitent en vrac sous courant d'eau, mais avec des pertes de poids à l'épluchage très importantes.

CH-A-506 982 décrit un épluche-légume comprenant un manche dans lequel est intégré un moteur électrique dont l'arbre entraîne un cylindre à surface rugueuse entouré partiellement d'une enveloppe de protection présentant des moyens d'arrivée d'eau. Le fonctionnement est analogue à celui d'une râpe et est mal adapté pour suivre les contours irréguliers de certains légumes.De plus, si il n'y a pas d'amenée d'eau, des bourrages se produisent rapinent et ôtent toute efficacité à l'outil.

La présente invention a pour objet de pallier ces inconvénients et de proposer un appareil éplucheur, pouvant être actionné à la main, permettant de peler très rapidement un fruit ou un légume quelle que soit sa consistance,sans effort de coupe, et pratiquement sans pression sur la surface à traiter.

La présente invention, concerne un appareil d'épluchage selon la revendication 1.

Le rotor porte une ou des petites lames, affûtées ou non faisant saillie de quelques dixièmes de millimètre au-dessus du plan de rotation. L'organe rotatif ou rotor est constitué par un bras ou, de préférence, par un disque.

L'appareil fonctionne ainsi selon un principe nouveau. En effet, les lames qui peuvent être non tranchantes. Contrairement à tous les dispositifs connus, la séparation de la peau et de la pulpe est effectuée non par coupe mais par impact à grande vitesse. Cet impact produit à l'intérieur du fruit une onde de choc par différence de duretés entre la peau et la pulpe. Cette onde de choc en réaction, opposée à la direction de l'impact, provoque le décollement de la peau. Sous l'influence de ces impacts, la peau est fragmentée et séparée de la pulpe ou partie intérieure du légume. Ainsi, l'appareil ne fonctionne pas comme une râpe dont les dents seraient bien évidemment très rapidement obstruées en fonction de la vitesse.

Conformément à l'invention, l'organe rotatif tourne autour d'un axe qui est perpendiculaire à la surface à peler ou à la direction de déplacement du rotor, alors que dans la technique antérieure, les outils tournaient autour d'un axe parallèle à la surface à peler.

Selon une autre caractéristique de l'invention, l'organe rotatif est monté à l'intérieur d'un capot qui évite les projections des particules de peau autour de l'appareil. Ces particules sont recueillies dans une sorte de réservoir qui les agglomère et leur permet de descendre progressivement par gravité.

Selon une autre caractéristique de l'invention, l'organe rotatif est monté pivotant, à l'intérieur du capot, autour d'un axe orthogonal à la direction de l'axe du rotor lorsque celui-ci est au repos, une courroie élastique reliant le moyeu du rotor à l'arbre moteur.

Ainsi, le bras ou rotor peut épouser la forme du fruit ou légume sans contrainte, la tension sur la courroie étant limitée même lors du pivotement du rotor.

Dans un autre mode de réalisation, le rotor est monté coulissant sur l'arbre moteur pour pouvoir suivre les reliefs du végétal à éplucher.

D'autres formes d'éxécution font l'objet des revendications indépendantes.

D'autres caractéristiques et avantages de la présente invention apparaîtront au cours de la description qui va suivre d'un mode particulier de réalisation, donné uniquement à titre d'exemple non limitatif, en regard des dessins qui représentent :

– la figure.1, une vue en élévation et en coupe de l'appareil ;

– la figure 2, une vue par-dessous ;

– la figure 3, une vue en coupe selon la ligne III-III de l'appareil ;

– la figure 4, un schéma illustrant l'éjection des épluchures ;

– les figures 5 à 7, des schémas montrant différentes positions de l'organe rotatif.

– les Figures 8 et 9, respectivement en perspective avec arrachement et en coupe verticale un autre mode de montage du rotor sur l'arbre moteur.

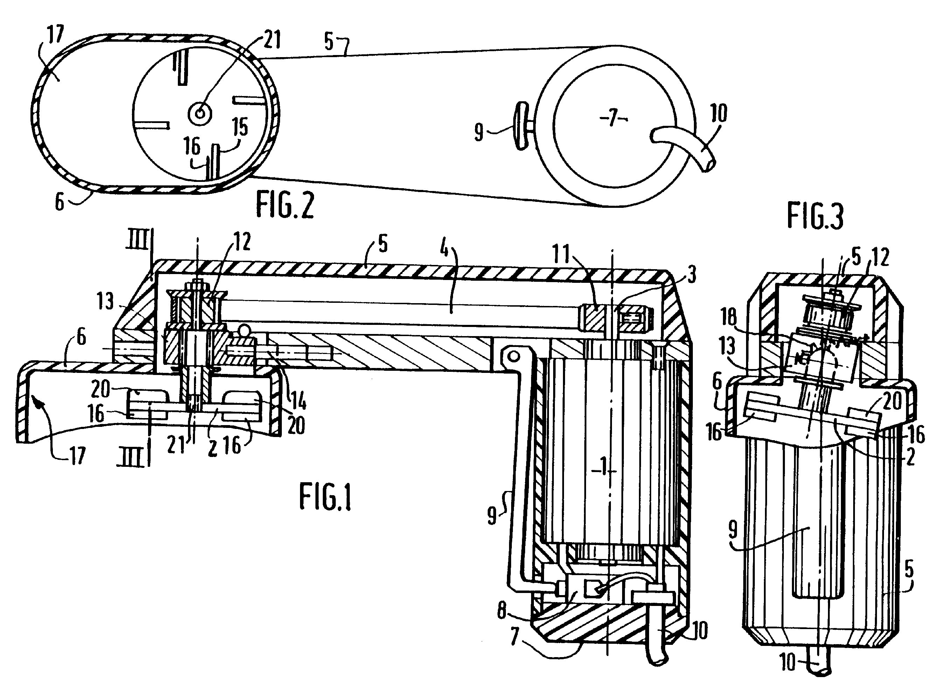

Sur les figures 1 à 3, le moteur électrique 1 est logé dans un carter 5 dont une partie forme un manche, et son arbre 3 de sortie entraîne l'organe rotatif en forme de disque 2, autour d'un axe 21, par l'intermédiaire d'une courroie 4 incluse dans le carter 5. Conformément à l'invention, la vitesse de rotation du moteur est telle qu'il entraîne les lames à une vitesse tangentielle d'au moins 7 m/s, atteignant de préférence 20 m/s, sans limitation supérieure. Pour protéger l'opérateur du contact avec le rotor 2 et de la projection des épluchures, le rotor 2 est avantageusement inclus dans un capot léger 6, solidaire du carter 5, dont la partie inférieure est ouverte.

Le carter 5 est fermé par un bouchon démontable 7. Le contact électrique est établi par un contacteur 8, par pression d'un doigt sur une manette 9.

A la prise en main de l'appareil, lorsqu'un doigt appuie sur la manette 9, le moteur 1 est alimenté, ce qui entraîne la mise en rotation de l'arbre 3 et du rotor 2. Le fruit ou légume peut être directement pris dans l'autre main. Il peut être encore tenu par un outil approprié tel qu'une pince ou une broche. Il suffit alors de promener l'outil rotatif sur les surfaces à éplucher.

L'appareil peut être relié au secteur par un cordon 10, mais il est avantageusement muni d'une batterie rechargeable, ce qui lui permet un fonctionnement autonome.

L'arbre 3 est solidaire d'une poulie 11 qui est réunie, par la courroie 4, à la poulie 12 d'entrainement de l'axe 21 du rotor 2. Le rotor, en forme de disque dans l'exemple représenté, est monté sur le carter 5 par l'intermédiaire d'un palier 13. Conformément à une caractéristique de l'invention, le palier 13 est monté pivotant autour d'un axe 14 fixe, de manière à pouvoir suivre la surface du fruit ou du légume à éplucher. Le rotor 2 comporte des butées 15, et des lames 16 faisant saillie de quelques dixièmes de mm. au-dessus des butées 15, avantageusement réparties par paires, pour éviter les vibrations. Les butées 15 servent de butées d'épaisseur. Le capot 6 présente une section oblongue de manière à ce que sa partie 17 recueille les épluchures comme celà sera expliqué par la suite.

Comme celà apparaît sur la figure 3, le palier 13 du rotor 2 monté pivotant sur l'axe 14 est rappelé en position verticale par un ressort 18. Un second ressort de caractéristique identique peut être monté en opposition. Il est, par ailleurs, rappelé dans sa position de repos par la tension exercée sur la courroie 4.

Les figures 5 à 7 sont des schémas montrant différentes positions du rotor 2, lors de l'épluchage d'un fruit ou d'un légume designé d'une manière générale par V.

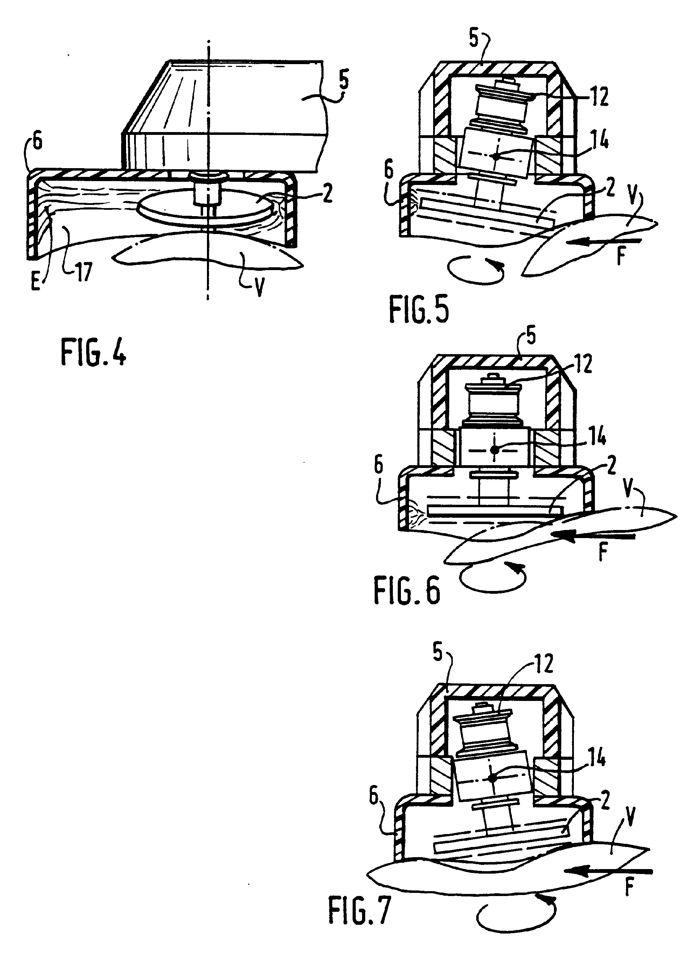

Sur les schémas représentés, le rotor tourne dans le sens sinistrorsum. Le déplacement relatif du fruit ou légume et de l'outil est symbolisé par les flèches F. Au début de l'épluchage (figure 5), le contact du produit provoque le pivotement du rotor 2 qui va progressivement se redresser (figure 6) en fonction de la planéité du produit V. En fait, le rotor va suivre la surface du fruit ou légume et, lorsque celle-ci est sensiblement plane, l'axe 21 de rotation du rotor est perpendiculaire à la surface. Au cours du déplacement, l'axe du rotor, comme représenté sur la figure 7, reste aligné avec le rayon de courbure de sorte qu'il épouse en permanence les contours du produit.

Un autre problème important dans un appareil de ce type, est le problème de l'éjection des résidus de peau. Etant donné la grande vitesse de rotation du rotor et sa structure, les épluchures sont pratiquement pulvérisées. Mais, il importe qu'elles soient dirigées vers un endroit donné à partir duquel leur sortie de l'appareil puisse être contrôlée, de manière à éviter la projection dans toutes les directions.

On utilise pour ce faire l'effet de turbine résultant de la très grande vitesse du rotor. Sous l'influence de cette vitesse, comme représenté sur la figure 4, les résidus chassés par la force centrifuge vers l'extérieur où ils arrivent dans la chambre 17. Ils se concentrent dans cette chambre et descendent progressivement le long de la paroi 19. Il est possible d'ajouter à la surface supérieure du rotor 2 des ailettes 20 (figure 1) qui amplifient les phénomènes aérodynamiques provoqués par la rotation de la turbine.

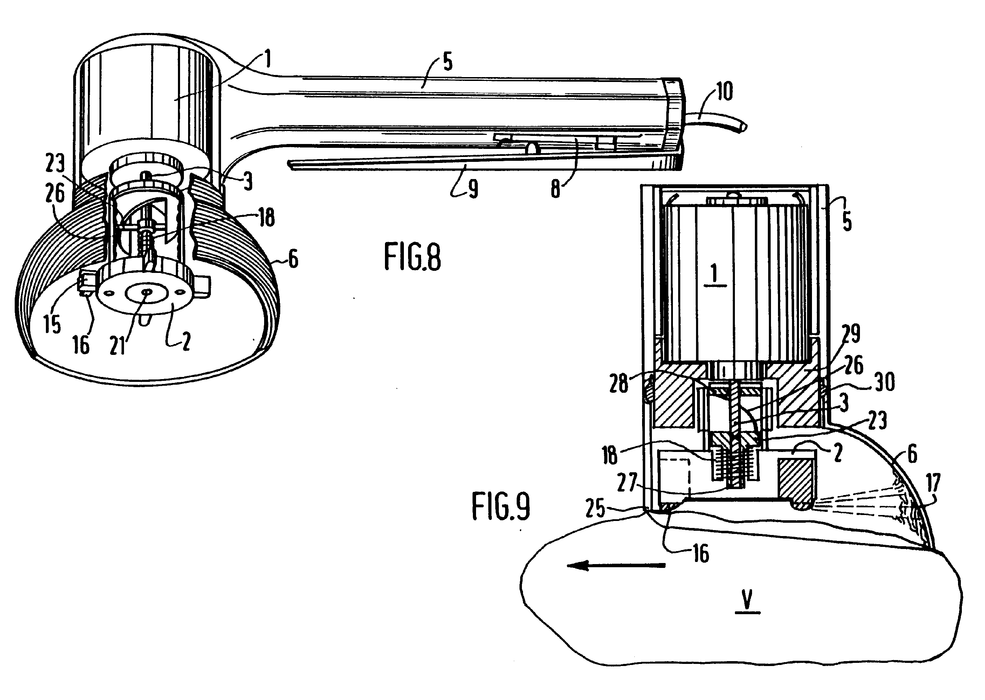

Dans le mode de réalisation représenté sur les figures 8 et 9, sur lesquelles les mêmes composants portent les mêmes références, on retrouve le moteur 1 muni d'un arbre long 3, sur lequel est fixé le rotor 2, l'axe de rotation 21 du rotor étant ici confondu avec l'axe 3. Dans ce mode de réalisation, le moteur 1 est disposé dans la tête du manche et le mouvement de rotation est transmis en direct et non plus par l'intermédiaire d'une courroie. L'arbre 3 comporte une clavette ou contrecame 23 qui coopère avec une came ou rampe hélicoïdale 26 solidaire de la base du rotor 2. En effet, dans ce mode de réalisation, le rotor 2 est monté "flottant" sur l'arbre de sortie 3. Le rotor tourne sur deux paliers 27 et 28 qui permettent la translation axiale du rotor sur une course de plusieurs millimètres. Un ressort 18 est intercalé entre la clavette 23 et le rotor 2 dans un puits de forme appropriée et sollicite le rotor dans la direction opposée au moteur. C'est à dire qu'en l'absence de toute pression exercée par le rotor sur un légume, par exemple, le rotor occupe sa position la plus basse en bout d'arbre 3 et qu'il se déplace vers le moteur lorsque la pression exercée croît. Bien entendu, le filet de la came 26 est orienté en fonction du sens de rotation du moteur de telle sorte que la clavette 23 provoque le retrait du rotor dès que la résistance à la coupe augmente.

En désignant par "F" la force d'entraînement en rotation et "R" le couple résistant, si "R" = 0, le rotor tourne librement en bout d'arbre, le ressort 18 étant détendu et le palier 28 en butée sur la clavette 23. Si "R" devient supérieur à "F", le rotor 2 remonte vers le moteur, comprimant le ressort 18 et l'ensemble trouve ainsi tout naturellement un équilibre. Il en resulte toujours un appui très doux sur le légume, ce montage permettant d'épouser les creux et les bosses du légume. Comme précédemment, une jupe de protection 6 avantageusement de forme ovoïde et sphérique recueille les épluchures (évitant l'éclaboussement ) sous l'effet du flux du rotor 2. La jupe 6 comporte une partie 25 formant butée et permettant l'appui sur le végétal à éplucher en facilitant la manipulation. Une pièce de liaison 29 réunit le manche 5 à la jupe de protection 6 par l'intermédiaire d'un bourrelet 30 et d'un griffe permettant l'utilisation de l'éplucheur tant pour les droitiers que pour les gauchers par une simple rotation d'un demi-tour de la jupe 6 autour du carter 5.

Comme dans l'exemple de réalisation précedent, le rotor 2 porte une lame 16 et de préférence deux lames symétriquement disposées pour éviter les vibrations et des butées de profondeur 15. La profondeur de coupe est ainsi déterminée par la différence de hauteur entre les lames et les butées. Les lames 16 peuvent être radiales et verticales ou, incurvées en forme de cuillère. Le balayage de la surface du fruit ou légume est épycycloïdal la surface balayée à chaque passe, dépendant du diamètre du rotor, étant de 10 à 20mm. de largeur. Enfin, le couple moteur peut être très faible , et, par exemple, de l'ordre de 30 g.cms, ce qui évite tout danger lors de l'utilisation, en coopération avec la rétraction du rotor en cas de choc. Les yeux des pommes de terre sont aisément éliminés par simple application de l'appareil. Enfin le nettoyage de l'éplucheur s'obtient instantanément en faisant tourner le rotor dans un bol d'eau.

La perte de substance comestibles est beaucoup moins importante qu'avec les autres procédés , cette perte étant de 30 à 50% pour les éplucheuses industrielles, de 25 à 30 % avec les couteaux de cuisine, de 20% avec un "économiseur" et de 8 à 12% avec un éplucheur selon l'invention.

## Revendications

1. Appareil d'épluchage de fruits, légumes ou analogue, comprenant, à l'intérieur d'un carter (5) un moteur électrique (1) entraînant en rotation un organe (2) partiellement entouré par une jupe (6), caractérisé en ce que l'axe de rotation (21) du rotor (2) est perpendiculaire, en position de travail, à la surface du végétal à peler, le rotor portant au moins une lame (16) d'une hauteur de quelques dixièmes de millimètre, le rotor (2) étant entraîné à une vitesse de rotation correspondant à une vitesse tangentielle de la lame (16) égale à au moins 7 mètres par seconde.

2. Appareil selon la revendication 1, caractérisé en ce que l'axe (21) du rotor (2) est monté dans un palier (13), lui-même monté pivotant autour d'un axe (14) solidaire du carter (5), et orthogonal à l'axe (21).

3. Appareil selon l'une des revendications 1 ou 2, caractérisé en ce que le rotor (2) est monté à l'intérieur d'un capot (6) ouvert à sa partie inférieure, le capot (6) présentant une section oblongue pour déterminer une chambre (17) de réception des épluchures.

4. Appareil selon l'une quelconque des revendications précédentes, caractérisé en ce que les moyens d'entraînement du rotor (21) consistent en un moteur électrique (1) inclus dans une partie du carter (5) formant manche, l'arbre (3) de sortie du moteur (1) étant mécaniquement relié à la poulie (12) d'entrainement du rotor (2) par une courroie élastique (4).

5. Appareil selon l'une quelconque des revendications précédentes, caractérisé en ce que le rotor (2) est constitué par un disque dont la périphérie porte des lames (16) et des butées de profondeur (15).

6. Appareil selon la revendication 5 , caractérisé en ce que le rotor (2) constitué par un disque est surmonté par des ailettes (20).

7. Appareil selon la revendication 1, caractérisé en ce que le rotor (2) est monté coulissant sur l'arbre moteur (3), en bout d'arbre, par l'intermédiaire de deux paliers (27,28), et est rappelé vers le bas par un ressort (18) intercalé entre l'arbre moteur (3) et le rotor (2).

8. Appareil selon la revendication 7, caractérisé en ce que l'entraînement du rotor (2) par l'arbre moteur (3) est effectué par l'intermédiaire d'une goupille (23) solidaire de l'arbre (3) dont les extrêmités portent sur une came hélicoïdale (26).

9. Appareil selon l'une quelconque de revendications précédentes, caractérisé en ce que le rotor (2) est partiellement entouré par une jupe ovoïde (6) pouvant prendre deux positions par rotation d'un demi-tour sur un bourrelet (30) du carter (5).

10. Appareil selon la revendication 1, caractérisé en ce que le rotor (2) est monté coulissant sur deux paliers (27,28) et entraîné en rotation par une courroie (4).

## Claims

1. An appliance for peeling fruit, vegetables, or the like, the appliance comprising an electric motor (1) inside a housing (5) and rotating a member (2) which is partially surrounded by a skirt (6), the appliance being characterized in that the axis of rotation (21) of the rotor (2) is perpendicular in the working position to the surface of the plant to be peeled, the rotor carrying at least one blade (16) having a height of a few tenths of a millimeter, the rotor (2) being rotated at a speed of rotation corresponding to a tangential speed for the blade (16) equal to at least 7 meters per second.

2. An appliance according to claim 1, characterized in that the axis (21) of the rotor (2) is mounted in a bearing (13) which is itself pivotally mounted about a pin (14) fixed to the housing (5) and extending orthogonally to the axis (21).

3. An appliance according to claim 1 or 2, characterized in that the rotor (2) is mounted inside a cover (6) having an open bottom, the cover (6) having an oblong section in order to define a chamber (17) for receiving peel.

4. An appliance according to any preceding claim, characterized in that the rotor drive means comprise an electric motor (1) included in a handle-forming portion of the housing (5), with the outlet shaft (3) of the motor (1) being mechanically connected to a pulley (12) driving the rotor (2) by means of a resilient belt (4).

5. An appliance according to any preceding claim, characterized in that the rotor (2) is constituted by a disk wise periphery carries blades (16) and depth abutments (15).

6. An appliance according to claim 5, characterized in that the rotor (2) constituted by a disk is surmounted by fins (20).

7. An appliance according to claim 1, characterized in that the rotor (2) is slidably mounted on the shaft (3) of the motor, at the end of the shaft, by means of two bearings (27, 28), and is urged downwardly by a spring (18) interposed between the motor shaft (3) and the rotor (2).

8. An appliance according to claim 7, characterized in that the motor shaft (3) drives the rotor (2) via a pin (23) fixed to the shaft (3) with the ends of the pin bearing against a helical cam (26).

9. An appliance according to any preceding claim, characterized in that the rotor (2) is partially surrounded by an egg-shaped skirt (6) capable of occupying two different positions by rotating through half a turn about beading (30) on the housing (5).

10. An appliance according to claim 1, characterized in that the rotor (2) is slidably mounted on two bearings (27, 28) and is rotated by a belt (4).

## Patentansprüche

1. Vorrichtung zum Schälen von Früchten, Gemüse und dgl. mit einem Elektromotor (1) in einem Gehäuse (5), der ein teilweise von einer Verkleidung (6) umgebenes Mittel (2) in Rotation versetzt, dadurch gekennzeichnet, daß die Rotationsachse (21) des Rotors (2) in der Arbeitsposition senkrecht zu der Oberfläche des zu schälenden Pflanzengewächses verläuft, und daß der Rotor wenigstens ein Klingenblatt (16) einer Höhe von einigen Zehnteln Millimetern trägt, wobei der Rotor mit einer Rotationsgeschwindigkeit angetrieben wird, die einer Tangentialgeschwindigkeit des Klingenblattes (16) von wenigstens 7 Meter pro Sekunde entspricht.

2. Vorrichtung nach Anspruch 1, dadurch gekennzeichnet, daß die Achse (21) des Rotors (2) in einem Lager (13) montiert ist, welches seinerseits drehbar um eine Achse (14) montiert ist, die fest mit dem Gehäuse (5) verbunden ist und senkrecht zur Achse (21) verläuft.

3. Vorrichtung nach einem der Ansprüche 1 oder 2, dadurch gekennzeichnet, daß der Rotor (2) im Innern einer nach unten geöffneten Abdeckhaube (6) angebracht ist, welche einen länglichen Querschnitt aufweist zur Bildung einer Aufnahmekammer (17) für die Schalenabfälle.

4. Vorrichtung nach einem der vorstehenden Ansprüche, dadurch gekennzeichnet, daß die Anriebsmittel des Rotors (21) aus einem Elektromotor (1) bestehen, der in einem griffartig ausgeformten Abschnitt des Gehäuses (5) untergebracht ist, wobei die Abtriebswelle (3) des Motors (1) über einen elastischen Treibriemen (4) mit der Antriebsscheibe (12) des Rotors (2) mechanisch verbunden ist.

5. Vorrichtung nach einem der vorstehenden Ansprüche, dadurch gekennzeichnet, daß der Rotor (2) aus einer Scheibe besteht, die in ihrem Randbereich Klingenblätter (16) und Tiefenanschläge (15) aufweist.

6. Vorrichtung nach Anspruch 5, dadurch gekennzeichnet, daß der aus einer Scheibe bestehende Rotor (2) oberseitig mit Flügeln (20) versehen ist.

7. Vorrichtung nach Anspruch 1, dadurch gekennzeichnet, daß der Rotor (2) über zwei Lager (27, 28) am Wellenende verschiebbar auf der Motorwelle (3) montiert ist, und daß er durch eine zwischen der Motorwelle (3) und dem Rotor (2) eingebrachte Feder (18) wieder nach unten zurückgestellt wird.

8. Vorrichtung nach Anspruch 7, dadurch gekennzeichnet, daß der Antrieb des Rotors (2) durch die Motorwelle (3) über einen fest mit der Welle (3) verbundenen Stift (23) erfolgt, dessen Enden an einer schraubenförmigen Nocke (26) anliegen.

9. Vorrichtung nach einem der vorstehenden Ansprüche, dadurch gekennzeichnet, daß der Rotor (2) teilweise von einer ovalen Verkleidung (6) umgeben ist, die durch eine 180°-Drehung an einem Flansch (30) des Gehäuses (5) zwei Positionen einnehmen kann.

10. Vorrichtung nach Anspruch 1, dadurch gekennzeichnet, daß der Rotor (2) verschiebbar in zwei Lagern (27, 28) angebracht ist und durch einen Treibriemen (4) in Rotation versetzt wird.

FIG.1

FIG.2

FIG.3

FIG.4

FIG.5

FIG.6

FIG.7

FIG.8

FIG.9